# EUROPÄISCHE PATENTANMELDUNG

(11) **EP 4 674 643 A1**
(43) Veröffentlichungstag der Anmeldung: **07.01.2026**
(21) Anmeldenummer: 25183747.2
(22) Anmeldetag: 18.06.2025
(51) Int. Cl.: B60C 11/01

(54) **LAUFSTREIFEN UND FAHRZEUGREIFEN MIT LAUFSTREIFEN**

(30) Priorität: 03.07.2024 DE 102024206264
(71) Anmelder: Continental Reifen Deutschland GmbH, 30175 Hannover (DE)
(72) Erfinder: Kristen, Florian, 30175 Hannover (DE); Rother, Helge, 30175 Hannover (DE); Camaj, Michal, 020 01 Púchov (SK); Goossen, Sebastian, 30175 Hannover (DE)
(74) Vertreter: Continental Corporation

(57) **Zusammenfassung**

Laufstreifen (1) für einen Fahrzeugreifen (2), umfassend
eine Lauffläche (3) und eine Reifenschulter (4),
wobei die Reifenschulter (4) eine Anzahl an gleich ausgeformten Aussparungen (5) aufweist, die in Reihe parallel zu der Lauffläche (3) angeordnet sind, wobei die Aussparungen (5) die Form eines Kugeloberflächensegmentes aufweisen,
wobei die Reifenschulter (4) ein Verstärkungselement (6) und eine das Verstärkungselement (6) stützende Stützstruktur (7) aufweist, wobei die Aussparungen (5) in der Stützstruktur (7) ausgebildet sind und eine maximale Tiefe der Aussparungen (5) kleiner oder gleich einer Höhe der Stützstruktur (7) ist.

## Beschreibung

Die Erfindung betrifft einen Laufstreifen für einen Fahrzeugreifen mit einer Lauffläche und einer Reifenschulter, wobei die Reifenschulter eine Anzahl an gleich ausgeformten Aussparungen aufweist. Die Aussparungen sind in Reihe parallel zu der Lauffläche angeordnet und weisen die Form eines Kugeloberflächensegmentes auf.

Vertiefungen oder Aussparungen in Form eines Kugeloberflächensegmentes werden insbesondere genutzt, um bei Laufstreifen und Fahrzeugreifen den Luftwiderstand zu verringern. Ein geringerer Luftwiderstand verbessert die Fahrdynamik des Kraftfahrzeuges und senkt somit den Kraftstoffverbrauch.

Die DE 10 2022 207 558 A1 offenbart einen Fahrzeugreifen, bei dem der Luftwiderstand durch eine Vielzahl an Vertiefungspaaren verringert ist. Dabei sind die Vertiefungspaare jeweils durch eine verengte Verbindungsstelle miteinander verbunden. Die DE 10 2010 036 765 A1, die DE 11 2014 000 477 T5 und die WO 2013/010726 A1 offenbaren ebenfalls jeweils einen Fahrzeugreifen mit einer Reifenseitenwand, die Oberflächenstrukturen aufweist und hierdurch den Luftwiderstand verringert.

Dem Stand der Technik ist gemeinsam, dass das Erreichen einer Reduzierung des Luftwiderstands mittels Aussparungen in der Reifenschulter einher geht mit einer Schwächung der Stabilität der Reifenschulter, da die Aussparungen in das Material der Reifenschulter eingreifen.

Vor diesem Hintergrund liegt der Erfindung die erste technische Aufgabe zugrunde, einen verbesserten Laufstreifen zur Verfügung zu stellen, der einen reduzierten Luftwiderstand aufweist und gleichzeitig eine Stabilität der Reifenschulter aufrechterhält. Ferner liegt der Erfindung die zweite Aufgabe zugrunde, unter Beibehaltung einer Stabilität der Reifenschulter einen verbesserten Fahrzeugreifen mit einem reduzierten Luftwiderstand zur Verfügung zu stellen.

Die erstgenannte Aufgabe wird gelöst durch einen Laufstreifen mit den Merkmalen gemäß Anspruch 1. Die zweitgenannte Aufgabe wird gelöst durch einen Fahrzeugreifen mit den Merkmalen gemäß nebengeordnetem Anspruch 15. Die Unteransprüche betreffen vorteilhafte Ausführungsformen der Erfindung.

Erfindungsgemäß ist ein Laufstreifen mit den Merkmalen nach Anspruch 1 offenbart.

Ein Laufstreifen gemäß Oberbegriff des Anspruchs 1 ist zur Verwendung mit einem Fahrzeugreifen ausgebildet und weist typischerweise eine radial außen liegende Lauffläche auf, die mit einer Straßenoberfläche in Kontakt tritt. Zudem weist der Laufstreifen eine Reifenschulter auf, die den Laufstreifen an einer seiner Längsseiten und damit die Lauffläche begrenzt. Im bestimmungsgemäßen Gebrauch des Laufstreifens mit einem Fahrzeugreifen begrenzt die Reifenschulter den Laufstreifen somit in einer axialen Richtung, wobei die der axialen Richtung zugrunde liegende Achse die Drehachse des Fahrzeugreifens ist.

Die Reifenschulter weist eine Anzahl an Aussparungen auf. Die Aussparungen sind gleich ausgeformt und weisen jeweils die Form eines Kugeloberflächensegmentes auf. Ein Kugeloberflächensegment ist ein Teil einer Oberfläche einer Kugel, wobei der Teil der Oberfläche beliebig sein kann. Beispielsweise kann der Teil der Oberfläche eine Halbkugel oder eine Kugelkalotte, auch als Kugelkappe oder Kugelhaube bezeichnet, sein. Zudem kann eine Grundfläche des Kugeloberflächensegmentes gekrümmt sein, d.h. die gekrümmte Grundfläche ist kein Ergebnis eines Schnittes der Kugel mit einer Ebene. Somit liegt die gekrümmte Grundfläche nicht in einer Ebene und weist keine kreisrunde Form auf.

Die Aussparungen in der Reifenschulter sind in einer Reihe ausgebildet. Die Reihe verläuft parallel zu der Lauffläche. Im bestimmungsgemäßen Gebrauch des Laufstreifens mit einem Fahrzeugreifen verläuft die Reihe somit entlang der Umfangsrichtung des Fahrzeugreifens.

Erfindungsgemäß weist die Reifenschulter ein Verstärkungselement und eine glatte Reifenschulter auf, wobei das Verstärkungselement angrenzend an die glatte Reifenschulter angeordnet ist. Die glatte Reifenschulter und das Verstärkungselement können stoffschlüssig verbunden sein. Das Verstärkungselement ist dazu ausgebildet, die glatte Reifenschulter vor Abschabungen, beispielsweise durch eine Bordsteinkante, zu schützen. Die glatte Reifenschulter kann hierdurch mit weniger Material ausgebildet werden, wodurch das Gewicht und damit der Rollwiderstand reduziert werden.

Zudem weist die Reifenschulter eine Stützstruktur auf. Die Stützstruktur ist angrenzend an das Verstärkungselement angeordnet und kann stoffschlüssig mit diesem verbunden sein. Ferner ist die Stützstruktur angrenzend an der glatten Reifenschulter angeordnet und kann stoffschlüssig mit dieser verbunden sein. Die Stützstruktur hat die Funktion, das Verstärkungselement bei einem Kontakt beispielsweise mit einer Bordsteinkante zu stützen.

Die Stützstruktur weist eine Höhe auf, welche sich aus einem Abstand zwischen der glatten Reifenschulter und einer der glatten Reifenschulter abgewandten Seite der Stützstruktur bestimmt.

Erfindungsgemäß sind die Aussparungen in der Stützstruktur ausgebildet. Die Aussparungen weisen eine maximale Tiefe auf, die sich aus einem kleinsten Abstand zwischen einer der Aussparungen und der glatten Reifenschulter bestimmt. Der kleinste Abstand ist immer positiv oder gleich Null. D.h., die Aussparungen sind so ausgebildet, dass diese nur in der Stützstruktur ausgebildet sind und nicht in die glatte Reifenschulter eingreifen.

In einem ersten erfindungsgemäßen Laufstreifen ist die maximale Tiefe gleich der Höhe der Stützstruktur, d.h., die Aussparungen sind angrenzend zu der glatten Reifenschulter ausgebildet. Der kleinste Abstand zwischen der glatten Reifenschulter und den Aussparungen ist somit gleich Null.

In einem zweiten erfindungsgemäßen Laufstreifen ist die maximale Tiefe kleiner als die Höhe der Stützstruktur, d.h., die Aussparungen sind nicht angrenzend zu der glatten Reifenschulter ausgebildet. Der kleinste Abstand zwischen der glatten Reifenschulter und den Aussparungen ist daher größer Null, wobei ein Material der Stützstruktur den kleinsten Abstand füllt.

Durch die Ausbildung der Aussparungen in der Stützstruktur wird der Luftwiderstand reduziert und gleichzeitig die Stabilität der Reifenschulter aufrechterhalten.

Besonders vorteilhaft ist ein Laufstreifen mit den Merkmalen gemäß Anspruch 2.

In dem vorteilhaften Laufstreifen bilden die in der Stützstruktur ausgebildeten, in Reihe angeordneten Aussparungen eine erste Aussparungsreihe.

Die Stützstruktur weist mindestens eine zweite Aussparungsreihe auf. D.h., die mindestens eine zweite Aussparungsreihe weist eine Anzahl an Aussparungen auf, die gleich ausgeformt sind und jeweils die Form eines Kugeloberflächensegmentes aufweisen. Zudem sind die Aussparungen der zweiten Aussparungsreihe in der Stützstruktur in einer Reihe ausgebildet, wobei die Reihe parallel zu der Lauffläche verläuft bzw. im bestimmungsgemäßen Gebrauch des Laufstreifens mit einem Fahrzeugreifen entlang der Umfangsrichtung des Fahrzeugreifens verläuft.

Die Aussparungen der zweiten Aussparungsreihe weisen eine maximale Tiefe auf. Der aus der maximalen Tiefe sich ergebende kleinste Abstand zwischen den Aussparungen der zweiten Aussparungsreihe und der glatten Reifenschulter ist immer positiv oder gleich Null. D.h., die Aussparungen der zweiten Aussparungsreihe sind so ausgebildet, dass diese nur in der Stützstruktur ausgebildet sind und nicht in die glatte Reifenschulter eingreifen. Die maximale Tiefe der zweiten Aussparungsreihe kann sich von der maximalen Tiefe der ersten Aussparungsreihe unterscheiden.

In einer ersten bevorzugten Ausführungsform des vorteilhaften Laufstreifens weist jede der Aussparungen der zweiten Aussparungsreihe die maximale Tiefe auf, die gleich der Höhe der Stützstruktur ist, d.h., die Aussparungen der zweiten Aussparungsreihe sind angrenzend zu der glatten Reifenschulter ausgebildet. Der kleinste Abstand zwischen der glatten Reifenschulter und den Aussparungen der zweiten Aussparungsreihe ist gleich Null.

In einer zweiten bevorzugten Ausführungsform des vorteilhaften Laufstreifens weist jede der Aussparungen der zweiten Aussparungsreihe die maximale Tiefe auf, die kleiner ist als die Höhe der Stützstruktur, d.h., die Aussparungen der zweiten Aussparungsreihe sind nicht angrenzend zu der glatten Reifenschulter ausgebildet. Der kleinste Abstand zwischen der glatten Reifenschulter und den Aussparungen der zweiten Aussparungsreihe ist daher größer Null, wobei ein Material der Stützstruktur den kleinsten Abstand füllt.

Die bevorzugten Ausführungsformen des vorteilhaften Laufstreifens mit den Merkmalen gemäß Anspruch 2 weisen neben dem Aufrechterhalten der Stabilität der Reifenschulter den weiteren Vorteil einer stärkeren Reduzierung des Luftwiderstands durch eine verbesserte Flächennutzung der der glatten Reifenschulter abgewandten Fläche der Stützstruktur auf.

Besonders vorteilhaft ist ein Laufstreifen mit den Merkmalen gemäß Anspruch 3.

In dem vorteilhaften Laufstreifen bilden die erste Aussparungsreihe und die mindestens eine zweite Aussparungsreihe eine Reihenanordnung. Die Reihenanordnung weist somit mehrere Aussparungsreihen auf, die die erste Aussparungsreihe und die mindestens eine zweite Aussparungsreihe umfassen, wobei eine Reihenfolge der Aussparungsreihen innerhalb der Reihenanordnung nicht festgelegt ist.

Die Aussparungsreihen der Reihenanordnung weisen jeweils eine maximale Tiefe auf, die mit der Entfernung zum Verstärkungselement abnimmt. D.h., eine nah am Verstärkungselement liegende Aussparungsreihe weist eine größere maximale Tiefe auf als eine entfernt zum Verstärkungselement liegende Aussparungsreihe. Somit nehmen auch die maximalen Tiefen der Aussparungsreihen zwischen der dem Verstärkungselement am nächsten liegenden Aussparungsreihe und der dem Verstärkungselement am entferntesten liegenden Aussparungsreihe kontinuierlich ab.

Der vorteilhafte Laufstreifen mit den Merkmalen gemäß Anspruch 3 weist neben dem Aufrechterhalten der Stabilität der Reifenschulter und der Reduzierung des Luftwiderstands den weiteren Vorteil einer Anpassung der Aussparungen an unterschiedliche Umlaufgeschwindigkeiten auf.

Besonders vorteilhaft ist ein Laufstreifen mit den Merkmalen gemäß Anspruch 4.

In dem vorteilhaften Laufstreifen weisen die Kugeloberflächensegmente der Aussparungen in derselben Aussparungsreihe denselben Radius auf. Demgegenüber weisen unterschiedliche Aussparungsreihen der Reihenanordnung einen unterschiedlichen Radius auf.

Insbesondere weisen die Aussparungsreihen der Reihenanordnung jeweils einen Radius auf, der mit der Entfernung zum Verstärkungselement abnimmt. D.h., eine Aussparungsreihe nahe dem Verstärkungselement weist Aussparungen mit Kugeloberflächensegmenten auf, deren gleicher Radius größer ist als der Radius der Kugeloberflächensegmente der Aussparungen einer Aussparungsreihe, die entfernt zu dem Verstärkungselement liegt. Somit nehmen auch die Radien der Kugeloberflächensegmente der Aussparungen in den Aussparungsreihen zwischen der dem Verstärkungselement nächstliegenden Aussparungsreihe und der dem Verstärkungselement am entferntesten liegenden Aussparungsreihe kontinuierlich ab.

Der vorteilhafte Laufstreifen mit den Merkmalen gemäß Anspruch 4 weist neben dem Aufrechterhalten der Stabilität der Reifenschulter den weiteren Vorteil einer Anpassung der Aussparungsreihen an die unterschiedlichen Umlaufgeschwindigkeiten sowie einer stärkeren Reduzierung des Luftwiderstands durch eine verbesserte Flächennutzung der der glatten Reifenschulter abgewandten Fläche der Stützstruktur auf.

Besonders vorteilhaft ist ein Laufstreifen mit den Merkmalen gemäß Anspruch 5.

In dem vorteilhaften Laufstreifen sind senkrecht zur Lauffläche die Aussparungen einer Aussparungsreihe der Reihenanordnung und die Aussparungen einer weiteren Aussparungsreihe der Reihenanordnung parallel zueinander angeordnet. Dabei kann eine zusätzliche Aussparungsreihe oder mehrere Aussparungsreihen zwischen der einen Aussparungsreihe und der weiteren Aussparungsreihe liegen. D.h., die eine Aussparungsreihe und die weitere Aussparungsreihe können nächstliegende Aussparungsreihen oder entfernt liegende Aussparungsreihen sein.

Die eine Aussparungsreihe und die weitere Aussparungsreihe verlaufen jeweils parallel zur Lauffläche, d.h., die parallele Ausrichtung der Aussparungen zueinander ist senkrecht zum Verlauf der Aussparungsreihen bzw. senkrecht zur Lauffläche.

Der vorteilhafte Laufstreifen mit den Merkmalen gemäß Anspruch 5 weist neben dem Aufrechterhalten der Stabilität der Reifenschulter und der Reduzierung des Luftwiderstands den weiteren Vorteil einer längeren Lebensdauer des vorteilhaften Laufstreifens auf, da mehr Material zwischen den Aussparungsreihen vorhanden ist und die Stützstruktur robuster, beispielsweise gegenüber Abschabungen durch eine Bordsteinkante, ist.

Besonders vorteilhaft ist ein Laufstreifen mit den Merkmalen gemäß Anspruch 6.

In dem vorteilhaften Laufstreifen sind senkrecht zur Lauffläche die Aussparungen einer Aussparungsreihe der Reihenanordnung und die Aussparungen einer weiteren Aussparungsreihe der Reihenanordnung versetzt zueinander angeordnet. Dabei kann eine zusätzliche Aussparungsreihe oder mehrere Aussparungsreihen zwischen der einen Aussparungsreihe und der weiteren Aussparungsreihe liegen. D.h., die eine Aussparungsreihe und die weitere Aussparungsreihe können nächstliegende Aussparungsreihen oder entfernt liegende Aussparungsreihen sein.

Die eine Aussparungsreihe und die weitere Aussparungsreihe verlaufen jeweils parallel zur Lauffläche, d.h., der Versatz der Ausrichtung der Aussparungen der einen Aussparungsreihe gegenüber den Aussparungen der weiteren Aussparungsreihe ist parallel zum Verlauf der Aussparungsreihen bzw. parallel zur Lauffläche.

Die Aussparungen der einen Aussparungsreihe der Reihenanordnung und die Aussparungen der weiteren Aussparungsreihe der Reihenanordnung weisen einen solchen Versatz auf, dass zwischen nächstliegenden Aussparungen der beiden Aussparungsreihen der Reihenanordnung derselbe Abstand vorliegt. D.h., eine Aussparung der einen Aussparungsreihe bildet mit zwei Aussparungen der weiteren Aussparungsreihe ein gleichschenkliges Dreieck.

Der vorteilhafte Laufstreifen mit den Merkmalen gemäß Anspruch 6 weist neben dem Aufrechterhalten der Stabilität der Reifenschulter den weiteren Vorteil einer stärkeren Reduzierung des Luftwiderstands auf.

Besonders vorteilhaft ist ein Laufstreifen mit den Merkmalen gemäß Anspruch 7.

In dem vorteilhaften Laufstreifen nimmt die Höhe der Stützstruktur mit der Entfernung zum Verstärkungselement ab. Der Abfall der Höhe ist kontinuierlich und kann beispielsweise linear oder exponentiell sein.

Die Höhe der Stützstruktur verringert sich senkrecht zur Lauffläche, aber nicht parallel zur Lauffläche, so dass die maximale Tiefe der Aussparungen in einer einzelnen Aussparungsreihe konstant bleibt. Die maximalen Tiefen der Aussparungen unterschiedlicher Aussparungsreihen können ebenfalls abnehmen, da die maximale Tiefe der Aussparungen in einer Aussparungsreihe immer kleiner oder gleich der jeweiligen Höhe der Stützstruktur ist. Es kann somit eine Abhängigkeit der maximalen Tiefen der Aussparungsreihen von der Höhe der Stützstruktur vorliegen.

Der vorteilhafte Laufstreifen mit den Merkmalen gemäß Anspruch 7 weist neben dem Aufrechterhalten der Stabilität der Reifenschulter und der Reduzierung des Luftwiderstands den weiteren Vorteil einer Gewichtsreduzierung mit einer damit einhergehenden Reduzierung des Rollwiderstands auf.

Besonders vorteilhaft ist ein Laufstreifen mit den Merkmalen gemäß Anspruch 8.

In dem vorteilhaften Laufstreifen ist die Stützstruktur entgegengesetzt der Richtung zur Lauffläche ausgebildet. D.h., zwischen der Lauffläche und der Stützstruktur ist das Verstärkungselement angeordnet. Dabei kann die Stützstruktur einen Großteil der glatten Reifenschulter auf der der Lauffläche abgewandten Seite des Verstärkungselements bedecken.

Der vorteilhafte Laufstreifen mit den Merkmalen gemäß Anspruch 8 weist neben dem Aufrechterhalten der Stabilität der Reifenschulter und der Reduzierung des Luftwiderstands den weiteren Vorteil einer leichteren Entformbarkeit des Laufstreifens auf.

Besonders vorteilhaft ist ein Laufstreifen mit den Merkmalen gemäß Anspruch 9.

In dem vorteilhaften Laufstreifen ist die Stützstruktur in Richtung zur Lauffläche ausgebildet. D.h., die Stützstruktur verläuft zwischen der Lauffläche und dem Verstärkungselement. Dabei kann die Stützstruktur sich bis zur Lauffläche erstrecken und beispielsweise Blöcke eines Reifenprofils vor Abschabungen durch eine Bordsteinkante schützen. Zudem kann die Stützstruktur zwischen einer maximalen Profiltiefe und dem Verstärkungselement verlaufen, um eine in Umlaufrichtung zusammenhängende Stützstruktur zu bilden.

Der vorteilhafte Laufstreifen mit den Merkmalen gemäß Anspruch 9 weist neben dem Aufrechterhalten der Stabilität der Reifenschulter und der Reduzierung des Luftwiderstands den weiteren Vorteil eines Schutzes des Reifenprofils durch die Stützstruktur auf.

Besonders vorteilhaft ist ein Laufstreifen mit den Merkmalen gemäß Anspruch 10.

In dem vorteilhaften Laufstreifen erstrecken sich das Verstärkungselement und die Stützstruktur entlang der gesamten Länge des Laufstreifens.

Der vorteilhafte Laufstreifen mit den Merkmalen gemäß Anspruch 10 weist neben dem Aufrechterhalten der Stabilität der Reifenschulter und der Reduzierung des Luftwiderstands den weiteren Vorteil eines ununterbrochenen Schutzes der glatten Reifenschulter entlang der Umlaufrichtung durch das Verstärkungselement und der dazugehörigen Stützstruktur auf.

Besonders vorteilhaft ist ein Laufstreifen mit den Merkmalen gemäß Anspruch 11.

In dem vorteilhaften Laufstreifen erstrecken sich das Verstärkungselement und die Stützstruktur in Verstärkungsabschnitten entlang der Länge des Laufstreifens.

Der vorteilhafte Laufstreifen mit den Merkmalen gemäß Anspruch 11 weist neben dem Aufrechterhalten der Stabilität der Reifenschulter und der Reduzierung des Luftwiderstands den weiteren Vorteil einer Gewichtsreduzierung mit einer damit einhergehenden Reduzierung des Rollwiderstands auf.

Besonders vorteilhaft ist ein Laufstreifen mit den Merkmalen gemäß Anspruch 12.

In dem vorteilhaften Laufstreifen ist die Stützstruktur in Verstärkungsabschnitte unterteilt. Zudem weisen Aussparungen einer Aussparungsreihe einen unterschiedlichen Radius auf. Aussparungen an den Rändern der Verstärkungsabschnitte weisen einen kleineren Radius auf als Aussparungen, die nicht an den Rändern der Verstärkungsabschnitte angeordnet sind.

Der vorteilhafte Laufstreifen mit den Merkmalen gemäß Anspruch 12 weist neben dem Aufrechterhalten der Stabilität der Reifenschulter den weiteren Vorteil einer stärkeren Reduzierung des Luftwiderstands durch eine verbesserte Flächennutzung der der glatten Reifenschulter abgewandten Fläche der Stützstruktur auf.

Besonders vorteilhaft ist ein Laufstreifen mit den Merkmalen gemäß Anspruch 13.

In dem vorteilhaften Laufstreifen bildet die Stützstruktur eine erste Stützstruktur. Die Reifenschulter weist ferner eine zweite Stützstruktur auf, die das Verstärkungselement stützt. Beispielsweise kann das Verstärkungselement in Richtung zur Lauffläche als auch in entgegengesetzter Richtung jeweils durch eine Stützstruktur gestützt werden.

Die zweite Stützstruktur ist sowohl angrenzend an das Verstärkungselement als auch angrenzend an die glatte Reifenschulter angeordnet. Die Stützstruktur kann stoffschlüssig mit dem Verstärkungselement und/oder mit der glatten Reifenschulter verbunden sein.

Die zweite Stützstruktur weist eine Anzahl an Aussparungen auf, die mindestens in einer Reihe angeordnet und gleich ausgeformt sind. Dabei weisen die Aussparungen jeweils die Form eines Kugeloberflächensegmentes auf. Die Reihe der Aussparungen verläuft parallel zu der Lauffläche. Im bestimmungsgemäßen Gebrauch des Laufstreifens mit einem Fahrzeugreifen verläuft die Reihe somit entlang der Umfangsrichtung des Fahrzeugreifens.

Die zweite Stützstruktur weist eine Höhe und die Aussparungen weisen eine maximale Tiefe auf, wobei die maximale Tiefe stets kleiner oder gleich der Höhe ist. Der kleinste Abstand zwischen einer der Aussparungen und der glatten Reifenschulter ist damit immer positiv oder gleich Null. D.h., die Aussparungen sind so ausgebildet, dass diese nicht in die glatte Reifenschulter eingreifen.

Der vorteilhafte Laufstreifen mit den Merkmalen gemäß Anspruch 13 weist neben dem Aufrechterhalten der Stabilität der Reifenschulter und der Reduzierung des Luftwiderstands den weiteren Vorteil einer höheren Stabilität des Verstärkungselements auf.

Besonders vorteilhaft ist ein Laufstreifen mit den Merkmalen gemäß Anspruch 14.

In dem vorteilhaften Laufstreifen bildet die Reifenschulter eine erste Laufstreifenseite. Dabei umfasst die Reifenschulter das Verstärkungselement, die Stützstruktur und die Aussparungen.

Zudem weist der vorteilhafte Laufstreifen eine zweite Laufstreifenseite auf. D.h., die zweite Laufstreifenseite umfasst eine Reifenschulter, die ein Verstärkungselement, eine Stützstruktur und Aussparungen aufweist.

Die Reifenschulter der zweiten Laufstreifenseite begrenzt den Laufstreifen an einer seiner Längsseiten und damit einhergehend die Lauffläche. Im bestimmungsgemäßen Gebrauch des Laufstreifens mit einem Fahrzeugreifen begrenzt die Reifenschulter der zweiten Laufstreifenseite den Laufstreifen somit in der axialen Richtung.

Das Verstärkungselement der zweiten Laufstreifenseite ist dazu ausgebildet, eine glatte Reifenschulter der zweiten Laufstreifenseite, beispielsweise vor Abschabungen, zu schützen. Das Verstärkungselement wird gestützt durch eine Stützstruktur der zweiten Laufstreifenseite.

Die Stützstruktur der zweiten Laufstreifenseite ist sowohl angrenzend an das Verstärkungselement als auch angrenzend an die glatte Reifenschulter angeordnet. Die Stützstruktur kann stoffschlüssig mit dem Verstärkungselement und/oder mit der glatten Reifenschulter verbunden sein.

Die Stützstruktur der zweiten Laufstreifenseite weist eine Anzahl an Aussparungen auf, die mindestens in einer Reihe angeordnet und gleich ausgeformt sind. Dabei weisen die Aussparungen jeweils die Form eines Kugeloberflächensegmentes auf. Die Reihe der Aussparungen verläuft parallel zu der Lauffläche. Im bestimmungsgemäßen Gebrauch des Laufstreifens mit einem Fahrzeugreifen verläuft die Reihe somit entlang der Umfangsrichtung des Fahrzeugreifens.

Die Stützstruktur weist eine Höhe und die Aussparungen weisen eine maximale Tiefe auf, wobei die maximale Tiefe stets kleiner oder gleich der Höhe ist. Der kleinste Abstand zwischen einer der Aussparungen und der glatten Reifenschulter ist damit immer positiv oder gleich Null. D.h., die Aussparungen sind so ausgebildet, dass diese nicht in die glatte Reifenschulter eingreifen.

Der vorteilhafte Laufstreifen mit den Merkmalen gemäß Anspruch 14 weist neben dem Aufrechterhalten der Stabilität der Reifenschulter und der Reduzierung des Luftwiderstands den weiteren Vorteil einer weiteren Reduzierung des Luftwiderstands auf, beispielsweise durch Anwenden der zweiten Laufstreifenseite auf der Innenseite eines Fahrzeugreifens.

Erfindungsgemäß ist ein Fahrzeugreifen mit den Merkmalen gemäß nebengeordnetem Anspruch 15 offenbart. Der erfindungsgemäße Fahrzeugreifen umfasst hierbei einen erfindungsgemäßen Laufstreifen.

Der erfindungsgemäße Fahrzeugreifen weist bei einem Aufrechterhalten der Stabilität der Reifenschulter eine Reduzierung eines Luftwiderstands auf.

Weitere Merkmale, Vorteile und Einzelheiten der Erfindung werden nun anhand der Zeichnungen näher beschrieben.
Figur 1 zeigt eine Reifenschulter eines vorteilhaften Laufstreifens mit einer Aussparungsreihe.
Figur 2 zeigt eine Reifenschulter eines weiteren vorteilhaften Laufstreifens mit zwei Aussparungsreihen, wobei die Aussparungen parallel zueinander angeordnet sind.
Figur 3 zeigt eine Reifenschulter eines weiteren vorteilhaften Laufstreifens mit zwei Aussparungsreihen, wobei die Aussparungen versetzt zueinander angeordnet sind.
Figur 4 zeigt eine Reifenschulter eines weiteren vorteilhaften Laufstreifens mit mehr als zwei Aussparungsreihen.
Figur 5 zeigt eine Reifenschulter eines weiteren vorteilhaften Laufstreifens mit mehr als zwei Aussparungsreihen, wobei der Radius mit der Entfernung zum Verstärkungselement abnimmt.
Figur 6 zeigt eine Reifenschulter eines weiteren vorteilhaften Laufstreifens, wobei die Stützstruktur entgegengesetzt der Richtung zur Lauffläche ausgebildet ist.
Figur 7 zeigt eine Reifenschulter eines weiteren vorteilhaften Laufstreifens, wobei die Stützstruktur in Richtung zur Lauffläche ausgebildet ist und das Reifenprofil stützt.
Figur 8 zeigt eine Reifenschulter eines weiteren vorteilhaften Laufstreifens, wobei die Aussparungen einer Aussparungsreihe an den Rändern der Verstärkungsabschnitte einen kleineren Radius aufweisen.
Figur 9 zeigt eine Seitenansicht eines vorteilhaften Fahrzeugreifens, wobei das Verstärkungselement und die Stützstruktur sich entlang der gesamten Länge des Laufstreifens erstrecken.
Figur 10 zeigt eine Seitenansicht eines weiteren vorteilhaften Fahrzeugreifens, wobei das Verstärkungselement und die Stützstruktur sich in Verstärkungsabschnitten entlang der Länge des Laufstreifens erstrecken.

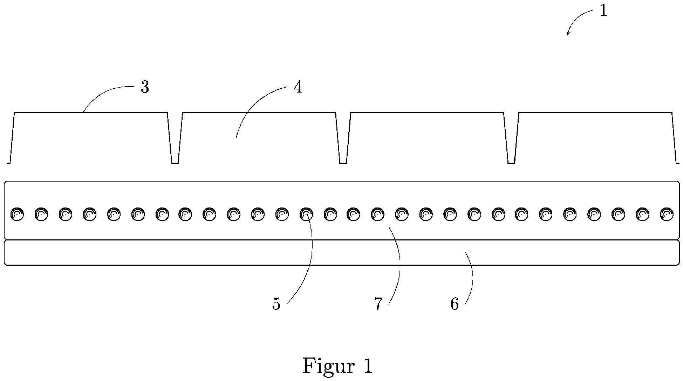

Die Figur 1 zeigt eine Reifenschulter 4 eines vorteilhaften Laufstreifens 1 der vorliegenden Erfindung, wobei die Reifenschulter 4 eine Lauffläche 3 begrenzt. Die Reifenschulter 4 umfasst eine Stützstruktur 7 und ein Verstärkungselement 6.

Die Stützstruktur 7 ist dem Verstärkungselement 6 angrenzend angeordnet, wobei die Stützstruktur 7 und das Verstärkungselement 6 stoffschlüssig miteinander verbunden sein können. Eine Funktion der Stützstruktur 7 ist die Stützung des Verstärkungselementes 6. Ferner umfasst die Stützstruktur 7 eine Anzahl an Aussparungen 5.

Die Aussparungen 5 in der Figur 1 weisen jeweils den gleichen Abstand zu dem Verstärkungselement 6 bzw. zu der Lauffläche 3 auf. Des Weiteren sind die Aussparungen 5 in einem gleichen Abstand zueinander ausgerichtet, so dass die Aussparungen 5 eine Reihe bilden. D.h., die Reihe der Aussparungen 5 verläuft parallel zu dem Verstärkungselement 6 bzw. zu der Lauffläche 3.

Zudem sind die Aussparungen 5 gleich ausgeformt. Jede Aussparung 5 weist die Form eines Kugeloberflächensegmentes auf. Dabei ist die maximale Tiefe der Aussparungen 5 kleiner oder gleich einer Höhe der Stützstruktur 7.

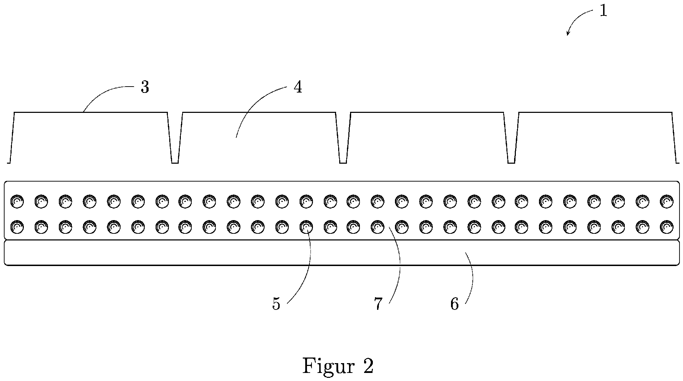

Die Figur 2 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 wiederum umfasst eine Anzahl an gleich ausgeformten Aussparungen 5, wobei jede Aussparung 5 die Form eines Kugeloberflächensegmentes aufweist. Dabei ist eine maximale Tiefe der Aussparungen 5 kleiner oder gleich einer Höhe der Stützstruktur 7.

Die Aussparungen 5 in Figur 2 sind in zwei Aussparungsreihen ausgebildet, wobei beide Aussparungsreihen parallel zur Lauffläche 3 und somit parallel zueinander verlaufen. Die Aussparungen 5 der einen Aussparungsreihe und die Aussparungen 5 der anderen Aussparungsreihe sind ebenfalls parallel zueinander angeordnet. Dabei erfolgt die parallele Ausrichtung der jeweiligen Aussparungen 5 senkrecht zu der Lauffläche 3.

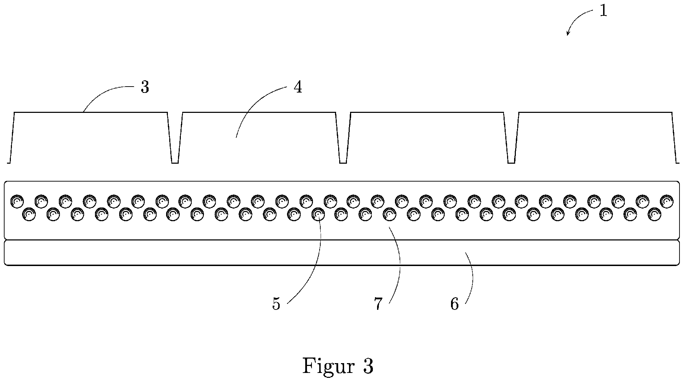

Die Figur 3 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an gleich ausgeformten Aussparungen 5, welche die Form eines Kugeloberflächensegmentes und eine maximale Tiefe kleiner oder gleich einer Höhe der Stützstruktur 7 aufweisen.

Die Aussparungen 5 in Figur 3 sind in zwei Aussparungsreihen ausgebildet, die parallel zur Lauffläche 3 und somit parallel zueinander verlaufen. Die Aussparungen 5 der einen Aussparungsreihe und die Aussparungen 5 der anderen Aussparungsreihe sind versetzt zueinander angeordnet. Der Versatz der beiden Aussparungsreihen erfolgt ebenfalls parallel zur Lauffläche 3 und ist derart, dass mittels einer Aussparung 5 der einen Aussparungsreihe und mittels zweier Aussparungen 5 der anderen Aussparungsreihe ein gleichschenkliges Dreieck gebildet werden kann, d.h., die Abstände der nächstliegenden Aussparungen 5 sind gleich groß. Zudem können die Abstände zwischen den Aussparungen 5 der jeweiligen Aussparungsreihe auch so gewählt sein, dass ein gleichseitiges Dreieck entsteht.

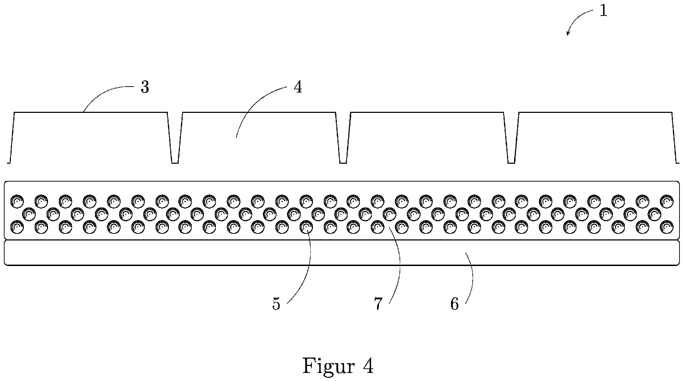

Die Figur 4 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an gleich ausgeformten Aussparungen 5, welche die Form eines Kugeloberflächensegmentes und eine maximale Tiefe kleiner oder gleich einer Höhe der Stützstruktur 7 aufweisen.

Die Aussparungen 5 in Figur 4 sind in drei Aussparungsreihen ausgebildet, die parallel zur Lauffläche 3 und somit parallel zueinander verlaufen.

Die Aussparungen 5 der dem Verstärkungselement 6 am nächsten liegenden Aussparungsreihe und die Aussparungen 5 der dem Verstärkungselement 6 am entferntesten liegenden Aussparungsreihe sind parallel zueinander angeordnet. Dabei erfolgt die parallele Ausrichtung der jeweiligen Aussparungen 5 senkrecht zu der Lauffläche 3.

Die Aussparungen 5 in der mittleren Aussparungsreihe sind sowohl den Aussparungen 5 der dem Verstärkungselement 6 am nächsten liegenden Aussparungsreihe als auch den Aussparungen 5 der dem Verstärkungselement 6 am entferntesten liegenden Aussparungsreihe versetzt angeordnet. Der Versatz der Aussparungen 5 der mittleren Aussparungsreihe zu den Aussparungen 5 der beiden äußeren Aussparungsreihen ist derart, dass die Abstände von nächstliegenden Aussparungen 5 zwischen nächstliegenden Aussparungsreihen gleich groß sind.

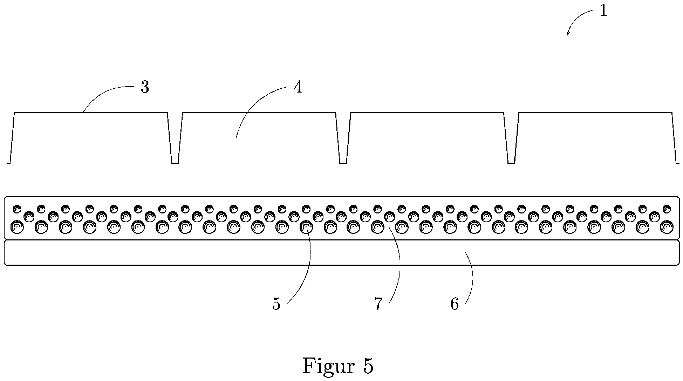

Die Figur 5 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an Aussparungen 5, welche die Form eines Kugeloberflächensegmentes und eine maximale Tiefe kleiner oder gleich einer Höhe der Stützstruktur 7 aufweisen. Die Aussparungen 5 sind in drei Reihen ausgebildet, die parallel zur Lauffläche 3 und somit parallel zueinander verlaufen. Aussparungen 5 der beiden äußeren Aussparungsreihen sind senkrecht zu der Lauffläche 3 parallel zueinander angeordnet. Die Aussparungen 5 in der mittleren Aussparungsreihe sind sowohl gegenüber der einen äußeren Aussparungsreihe als auch gegenüber der anderen äußeren Aussparungsreihe versetzt angeordnet, so dass die Abstände von nächstliegenden Aussparungen 5 zwischen nächstliegenden Aussparungsreihen gleich groß sind.

Die Aussparungen 5 in Figur 5 sind in einer einzelnen Aussparungsreihe gleich ausgeformt, unterscheiden sich jedoch in unterschiedlichen Aussparungsreihen.

Die Aussparungen 5 in den unterschiedlichen Aussparungsreihen weisen einen unterschiedlichen Radius der Kugeloberflächensegmente auf. Während die Kugeloberflächensegmente in den Aussparungen 5 der dem Verstärkungselement 6 am nächsten liegenden Aussparungsreihe einen großen Radius aufweisen, weisen die Kugeloberflächensegmente in den Aussparungen 5 der dem Verstärkungselement 6 am entferntesten liegenden Aussparungsreihe einen kleinen Radius auf.

Der Radius der Kugeloberflächensegmente in den Aussparungen 5 der mittleren Aussparungsreihe ist kleiner als der Radius der Kugeloberflächensegmente in den Aussparungen 5 der dem Verstärkungselement 6 am nächsten liegenden Aussparungsreihe und größer als der Radius der Kugeloberflächensegmente in den Aussparungen 5 der dem Verstärkungselement 6 am entferntesten liegenden Aussparungsreihe. D.h., der Radius der Kugeloberflächensegmente in den Aussparungen 5 der einzelnen Aussparungsreihen nimmt mit der Entfernung zum Verstärkungselement 6 ab. D.h. ebenfalls, dass der Radius der Kugeloberflächensegmente in den Aussparungen 5 der einzelnen Aussparungsreihen mit der Entfernung zur Lauffläche 3 zunimmt.

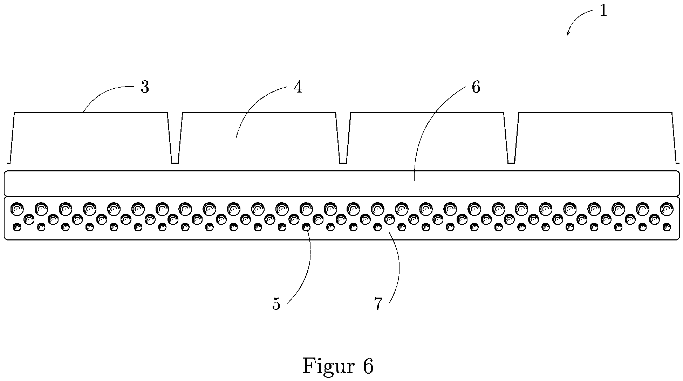

Die Figur 6 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an Aussparungen 5, welche die Form eines Kugeloberflächensegmentes und eine maximale Tiefe kleiner oder gleich einer Höhe der Stützstruktur 7 aufweisen. Die Aussparungen 5 sind in drei Aussparungsreihen ausgebildet, die parallel zur Lauffläche 3 und somit parallel zueinander verlaufen. Die Aussparungen 5 der beiden äußeren Aussparungsreihen sind senkrecht zu der Lauffläche 3 parallel zueinander angeordnet, wohingegen die Aussparungen 5 in der mittleren Aussparungsreihe sowohl gegenüber der einen äußeren Aussparungsreihe als auch gegenüber der anderen äußeren Aussparungsreihe versetzt angeordnet sind. Ferner nehmen Radien der Kugeloberflächensegmente in den Aussparungen 5 der einzelnen Aussparungsreihen mit der Entfernung zum Verstärkungselement 6 ab.

Die Stützstruktur 7 in Figur 6 ist entgegengesetzt der Richtung zur Lauffläche 3 ausgebildet. Damit ist das Verstärkungselement 6 nunmehr zwischen der Lauffläche 3 und der Stützstruktur 7 angeordnet.

Zudem erfolgt eine Umkehr der Anordnung der Aussparungsreihen gegenüber den vorhergehenden Ausführungsbeispielen. Die Aussparungen 5 der dem Verstärkungselement 6 am nächsten liegenden Aussparungsreihe sind nunmehr zwischen der Lauffläche 3 und den Aussparungen 5 der dem Verstärkungselement 6 am entferntesten liegenden Aussparungsreihe angeordnet.

Die Abnahme der Radien der Kugeloberflächensegmente der Aussparungen 5 der einzelnen Aussparungsreihen mit der Entfernung zum Verstärkungselement 6 ist in Relation zur Lauffläche 3 ebenfalls umgekehrt. Im Gegensatz zur Figur 5 nehmen die Radien mit der Entfernung zur Lauffläche 3 ab.

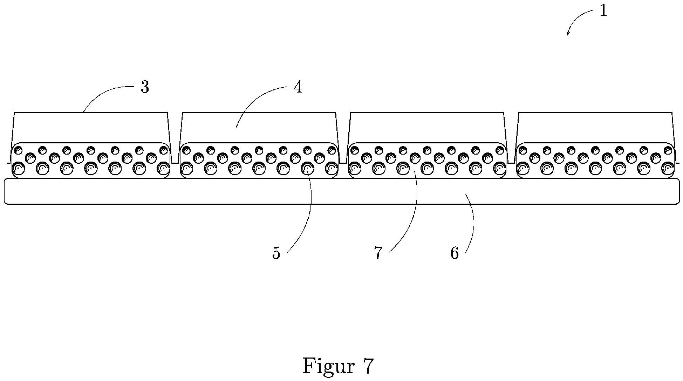

Die Figur 7 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an Aussparungen 5, welche die Form eines Kugeloberflächensegmentes und eine maximale Tiefe kleiner oder gleich einer Höhe der Stützstruktur 7 aufweisen. Die Aussparungen 5 sind in drei Reihen ausgebildet, die parallel zur Lauffläche 3 und somit parallel zueinander verlaufen. Die Aussparungen 5 der beiden äußeren Aussparungsreihen sind senkrecht zu der Lauffläche 3 parallel zueinander angeordnet, wohingegen die Aussparungen 5 der mittleren Aussparungsreihe sowohl gegenüber den Aussparungen 5 der einen äußeren Aussparungsreihe als auch gegenüber den Aussparungen 5 der anderen äußeren Aussparungsreihe versetzt angeordnet sind. Ferner nehmen die Radien der Kugeloberflächensegmente in den Aussparungen 5 der einzelnen Aussparungsreihen mit der Entfernung zum Verstärkungselement 6 ab.

Die Stützstruktur 7 in Figur 7 ist in Richtung zur Lauffläche 3 ausgebildet. Im Gegensatz zu den vorhergehenden vorteilhaften Laufstreifen 1 ist die Stützstruktur 7 in Figur 7 in Verstärkungsabschnitte unterteilt. Die Unterteilung erfolgt parallel zur Lauffläche 3.

Die Verstärkungsabschnitte der Stützstruktur 7 erstrecken sich über einen Teil eines Reifenprofils des vorteilhaften Laufstreifens 1 und erlauben einen stärkeren Schutz des Reifenprofils beispielsweise vor Abschabungen durch eine Bordsteinkante.

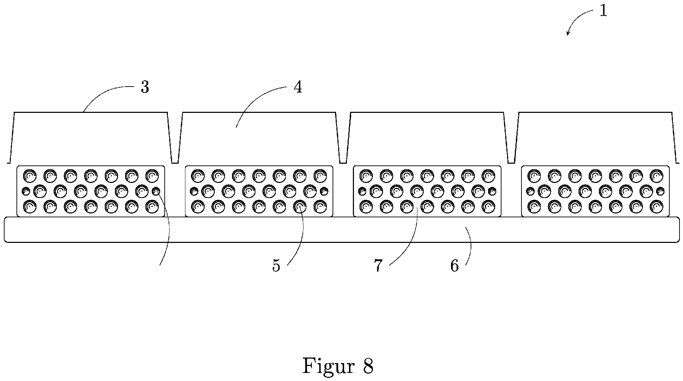

Die Figur 8 zeigt einen weiteren vorteilhaften Laufstreifen 1 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an Aussparungen 5, welche die Form eines Kugeloberflächensegmentes und eine maximale Tiefe kleiner oder gleich einer Höhe der Stützstruktur 7 aufweisen. Die Aussparungen 5 sind in drei Reihen ausgebildet, die parallel zur Lauffläche 3 und somit parallel zueinander verlaufen. Die Aussparungen 5 der beiden äußeren Aussparungsreihen sind gleich ausgeformt und senkrecht zu der Lauffläche 3 parallel zueinander angeordnet. Ferner ist die Stützstruktur 7 in Verstärkungsabschnitte parallel zur Lauffläche 3 unterteilt.

Die Aussparungen 5 in der mittleren Aussparungsreihe in Figur 8 sind in zwei Gruppen unterteilt. Die erste Gruppe der Aussparungen 5 ist an den Rändern der Verstärkungsabschnitte angeordnet, wohingegen die zweite Gruppe der Aussparungen 5 nicht an den Rändern der Verstärkungsabschnitte angeordnet ist.

Die zweite Gruppe der Aussparungen 5 in der mittleren Aussparungsreihe sind sowohl gegenüber den Aussparungen 5 der einen äußeren Aussparungsreihe als auch gegenüber den Aussparungen 5 der anderen äußeren Aussparungsreihe derart versetzt angeordnet, dass die Abstände von nächstliegenden Aussparungen 5 zwischen nächstliegenden Aussparungsreihen gleich groß sind.

Die erste Gruppe der Aussparungen 5 in der mittleren Aussparungsreihe sind sowohl gegenüber den Aussparungen 5 der einen äußeren Aussparungsreihe als auch gegenüber den Aussparungen 5 der anderen äußeren Aussparungsreihe ebenfalls versetzt angeordnet, ohne dabei gleiche Abstände zwischen nächstliegenden Aussparungsreihen zu bilden.

Die zweite Gruppe der Aussparungen 5 weist die gleiche Form auf wie Aussparungen 5 der äußeren Aussparungsreihen. D.h., die Radien der äußeren Aussparungsreihen und der Radius der zweiten Gruppe sind gleich.

Die erste Gruppe der Aussparungen 5 weist eine unterschiedliche Form gegenüber der zweiten Gruppe der Aussparungen 5 bzw. gegenüber den Aussparungen 5 der äußeren Aussparungsreihen auf. Der Radius der ersten Gruppe der Aussparungen 5 ist im Vergleich kleiner und ist abhängig von dem verfügbaren Platz an den Rändern der Verstärkungsabschnitte.

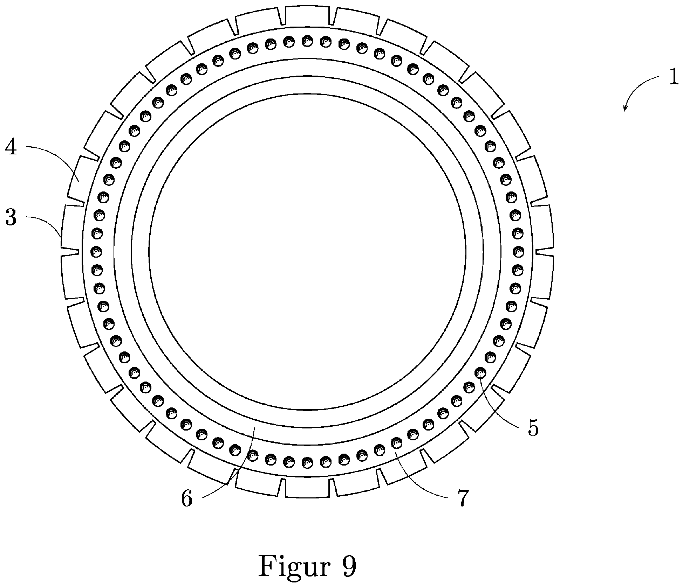

Die Figur 9 zeigt einen vorteilhaften Fahrzeugreifen 2 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an gleich ausgeformten Aussparungen 5, welche die Form eines Kugeloberflächensegmentes und eine maximale Tiefe kleiner oder gleich einer Höhe der Stützstruktur 7 aufweisen. Die Aussparungen 5 sind in einer Aussparungsreihe ausgebildet, die parallel zur Lauffläche 3 bzw. in Umlaufrichtung verläuft.

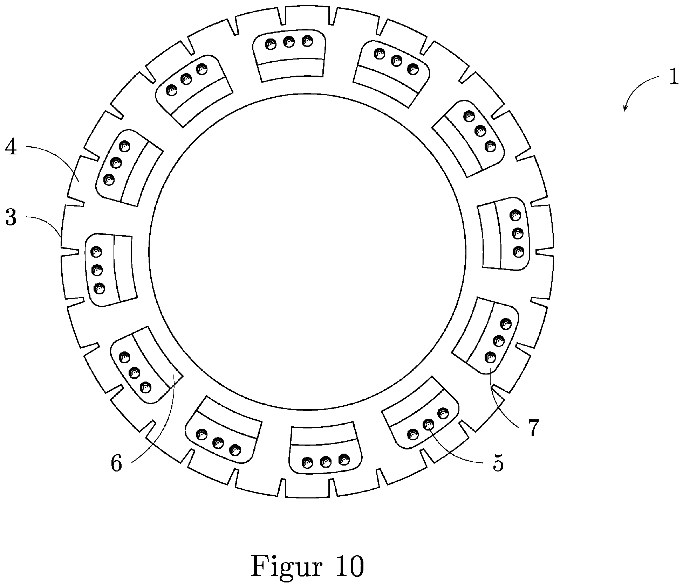

Die Figur 10 zeigt einen weiteren vorteilhaften Fahrzeugreifen 2 der vorliegenden Erfindung mit einer eine Lauffläche 3 begrenzenden Reifenschulter 4, die ein Verstärkungselement 6 und eine das Verstärkungselement 6 stützende Stützstruktur 7 umfasst. Die Stützstruktur 7 umfasst eine Anzahl an gleich ausgeformten Aussparungen 5, welche die Form eines Kugeloberflächensegmentes und eine maximale Tiefe kleiner oder gleich einer Höhe der Stützstruktur 7 aufweisen.

Die Stützstruktur 7 in Figur 10 ist in Verstärkungsabschnitte unterteilt, wobei die Unterteilung parallel zur Lauffläche 3 bzw. in Umlaufrichtung erfolgt.

Die Aussparungen 5 sind innerhalb der einzelnen Verstärkungsabschnitte in einer Aussparungsreihe ausgebildet, die parallel zur Lauffläche 3 bzw. in Umlaufrichtung verläuft.

### Bezugszeichenliste

- 1: Laufstreifen
- 2: Fahrzeugreifen
- 3: Lauffläche
- 4: Reifenschulter
- 5: Aussparungen
- 6: Verstärkungselement
- 7: Stützstruktur

## Patentansprüche

1. Laufstreifen (1) für einen Fahrzeugreifen (2), umfassend
eine Lauffläche (3) und eine Reifenschulter (4),
wobei die Reifenschulter (4) eine Anzahl an gleich ausgeformten Aussparungen (5) aufweist, die in Reihe parallel zu der Lauffläche (3) angeordnet sind, wobei die Aussparungen (5) die Form eines Kugeloberflächensegmentes aufweisen, **dadurch gekennzeichnet, dass**
die Reifenschulter (4) ein Verstärkungselement (6) und eine das Verstärkungselement (6) stützende Stützstruktur (7) aufweist, wobei die Aussparungen (5) in der Stützstruktur (7) ausgebildet sind und eine maximale Tiefe der Aussparungen (5) kleiner oder gleich einer Höhe der Stützstruktur (7) ist.

2. Laufstreifen (1) nach Anspruch 1, **dadurch gekennzeichnet, dass** die in Reihe angeordneten Aussparungen (5) eine erste Aussparungsreihe bilden, und dass die Stützstruktur (7) mindestens eine zweite Aussparungsreihe aufweist, wobei die maximale Tiefe der zweiten Aussparungsreihe kleiner oder gleich der Höhe der Stützstruktur (7) ist.

3. Laufstreifen (1) nach Anspruch 2, **dadurch gekennzeichnet, dass** die erste Aussparungsreihe und mindestens die zweite Aussparungsreihe eine Reihenanordnung bilden, und dass die maximalen Tiefen der Aussparungsreihen der Reihenanordnung mit der Entfernung zum Verstärkungselement (6) abnehmen.

4. Laufstreifen (1) nach Anspruch 2 oder 3, **dadurch gekennzeichnet, dass** Radien der Kugeloberflächensegmente der Aussparungsreihen der Reihenanordnung mit der Entfernung zum Verstärkungselement (6) abnehmen.

5. Laufstreifen (1) nach einem der Ansprüche 2 bis 4, **dadurch gekennzeich net**, dass senkrecht zur Lauffläche (3) die Aussparungen (5) einer Aussparungsreihe der Reihenanordnung und die Aussparungen (5) einer weiteren Aussparungsreihe der Reihenanordnung parallel zueinander angeordnet sind.

6. Laufstreifen (1) nach einem der Ansprüche 2 bis 4, **dadurch gekennzeich net**, dass senkrecht zur Lauffläche (3) die Aussparungen (5) einer Aussparungsreihe der Reihenanordnung und die Aussparungen (5) einer weiteren Aussparungsreihe der Reihenanordnung versetzt zueinander angeordnet sind, so dass zwischen nächstliegenden Aussparungen (5) der einen Aussparungsreihe und der weiteren Aussparungsreihe derselbe Abstand vorliegt.

7. Laufstreifen (1) nach einem der vorhergehenden Ansprüche, **dadurch gekenn zeichnet**, dass die Höhe der Stützstruktur (7) mit der Entfernung zum Verstärkungselement (6) abnimmt.

8. Laufstreifen (1) nach einem der Ansprüche 1 bis 7, **dadurch gekennzeich net**, dass die Stützstruktur (7) entgegengesetzt der Richtung zur Lauffläche (3) ausgebildet ist.

9. Laufstreifen (1) nach einem der Ansprüche 1 bis 7, **dadurch gekennzeich net**, dass die Stützstruktur (7) in Richtung zur Lauffläche (3) ausgebildet ist.

10. Laufstreifen (1) nach einem der Ansprüche 1 bis 9, **dadurch gekennzeich net**, dass das Verstärkungselement (6) und die Stützstruktur (7) sich entlang der gesamten Länge des Laufstreifens (1) erstrecken.

11. Laufstreifen (1) nach einem der Ansprüche 1 bis 9, **dadurch gekennzeich net**, dass das Verstärkungselement (6) und die Stützstruktur (7) sich in Verstärkungsabschnitten entlang der Länge des Laufstreifens (1) erstrecken.

12. Laufstreifen (1) nach Anspruch 11, **dadurch gekennzeichnet, dass** an Rändern der Verstärkungsabschnitte angrenzende Aussparungen (5) einer Aussparungsreihe gegenüber den weiteren Aussparungen (5) der Aussparungsreihe einen kleineren Radius aufweisen.

13. Laufstreifen (1) nach einem der vorhergehenden Ansprüche, **dadurch geken nzeichnet**, dass die Stützstruktur (7) eine erste Stützstruktur bildet, und dass die Reifenschulter (4) eine zweite das Verstärkungselement (6) stützende Stützstruktur aufweist.

14. Laufstreifen (1) nach einem der vorhergehenden Ansprüche, **dadurch geken nzeichnet**, dass die Reifenschulter (4), umfassend das Verstärkungselement (6), die Stützstruktur (7) und die Aussparungen (5), eine erste Laufstreifenseite bildet, und dass der Laufstreifen (1) eine zweite Laufstreifenseite aufweist.

15. Fahrzeugreifen (2), umfassend einen Laufstreifen (1) nach einem der Ansprüche 1 bis 14.
